# EUROPEAN PATENT APPLICATION

(11) **EP 1 085 717 A1**
(43) Date of publication of application: **21.03.2001**
(21) Application number: 00119553.6
(22) Date of filing: 07.09.2000
(51) Int. Cl.: H04L 29/06

(54) **Device and method for the transmission of multimedia data**

(30) Priority: 08.09.1999 IT BO990482
(71) Applicant: Lungarini, Maria Grazia, 40136 Bologna (IT); Mercuri, Emanuel Diego, 40138 Bologna (IT); Foresti, Giampaolo, 40123 Bologna (IT); Lodolo, Enrico, 40129 Bologna (IT)
(72) Inventor: Lungarini, Maria Grazia, 40136 Bologna (IT); Mercuri, Emanuel Diego, 40138 Bologna (IT); Foresti, Giampaolo, 40123 Bologna (IT); Lodolo, Enrico, 40129 Bologna (IT)
(74) Representative: Negrini, Elena

(57) **Abstract**

A device for the transmission of multimedia data, particularly audio and/or video excerpts in encoded digital form, includes: a central unit (1) containing a memory of audio and/or video excerpts; a switching and spreading unit (2); and a plurality of peripheral unit (4), having control means (10, 11) to select the transmission of an audio and/or video excerpt, such control means (10, 11) being operated independently by any one or more of the peripheral units (4).

The present invention also relates to a method for the transmission of multimedia data performed by said device.

## Description

The present invention concerns a device and a method for the transmission of multimedia data, such as audiovisual data, in encoded digital form, particularly audio data to transmit from a central unit to a plurality of peripheral units.

Transmission devices for audio data from a central unit to a plurality of peripheral units are used for instance inside trains or airplanes. In such known devices, the musical excerpts transmitted by the central unit can be listened by a plurality of travellers, by means of special receiving units of armchairs onto which the travellers are sat.

A first drawback of these known devices is the fact that the single listener cannot choose the musical excerpt, but must listen necessary to the excerpts according to the predefined order. This is due to the fact that every excerpt is contemporarily transmitted to all the users. At most the listener can choose the transmission channel, or rather, for instance, discriminate the listening between light music, classical music or whatever.

A second drawback of these devices of known technique is the fact that these devices do not consent changes under way, for instance, the insertion of additional excerpts, the insertion of further channels (for instance a channel for news bulletins) and in general any kind of change that still keeps recorded the excerpts previously inserted. Such devices are therefore poorly adaptable and updateable.

The present invention resolves such problems of the preceding technique, by means of a device for the transmission of audio and/or video excerpts in encoded digital form, having:
- a central unit, having a local storage unit fit to store the audio and/or video excerpts;
- a switching and spreading unit connected to said central unit; and
- a plurality of peripheral units, connected to said switching and spreading unit, every of said peripheral units having in turn:
- control means for selecting the transmission of anyone of the audio and/or video excerpts stored in said local storage unit; and
- decoding means, fit for decoding the received audio and/or video excerpts, said control means being operated independently by anyone or more of said peripheral units.

Furthermore it is provided a transmission method of audio and/or video excerpts, in encoded digital form from one or more central units to a plurality of peripheral unit, said method provides:
a) to require, on the peripheral side, the transmission of an excerpt;
b) to convert, on the peripheral side, said request into a digital command;
c) to transmit said digital command;
d) to retrieve, from the central unit and according to said digital command, one among several excerpts;
e) to transmit in encoded digital form said retrieved excerpt; and,
f) to decode and to convert said retrieved transmitted excerpt for being listened and/or viewed by a user;
said excerpts may be requested, listened and/or viewed independently from any one or more of said peripheral units.

Advantageous characteristics of the present invention are described in claims depending from the same main claims.

A first advantage of the present invention is to allow the user to chose both the programs and the preferred musical excerpts. At every instant -also during the normal listening of the excerpt - every user can independently decide to pass to an excerpt different from the one listened at that moment or even decide to listen again the same excerpt from the beginning.

A second advantage is the adaptability of the whole device, in a such way to allow changes of any kind such as the addition of new channels, the addition or the suppression of musical excerpts and generally any kind of change.

Further advantages and characteristics of the invention will be evident from the following descriptions of two preferred embodiments, described by way of a not limitative example.

Reference will be done to the figures of the attached drawings, in which:
- figure 1 shows a block diagram of the device object of the present invention;
- figure 2 shows a schematic diagram related to the external panel structure of a listening unit;
- figure 3 shows the hardware/software structure of a server unit;
- figure 4 shows the hardware/software structure of a listening unit;
- figure 5 shows an overall block diagram of a second embodiment of the device object of the present invention;
- figure 6 shows the hardware/software structure of a host unit of the device of figure 5;
- figure 7 shows the hardware/software structure of a listening unit of the device of figure 5.

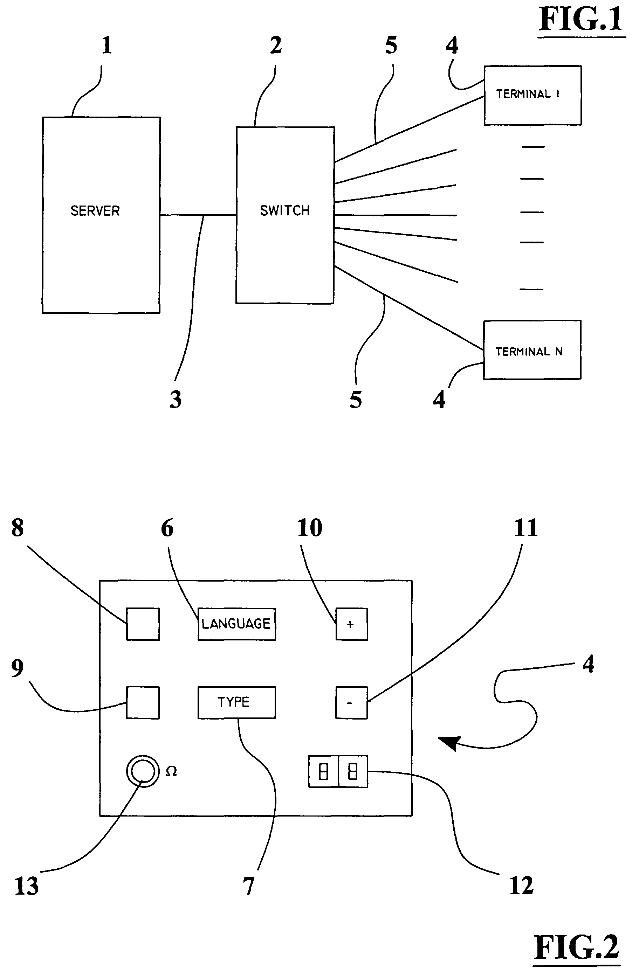

With reference to figure 1, there is a central unit 1, so-called "server", for the network data transmission through Ethernet connection, connected to a switching and spreading unit 2, for instance an Ethernet switch, by means of a network connection 3, for instance at 100 MHz. The switching and spreading unit 2 is connected to a plurality of terminals 4 by means of corresponding connections at 10 MHz, shown in figure with numeral 5.

The use of an Ethernet switch is an advantageous embodiment of the present invention, because it is a peripheral able to address packets in a very fast way, independently of the packet protocol. The Ethernet switch 2, 10/100 type for instance, such as the Cisco 5500 having two connection channels at 100 MHz and 96 connection channels at 10 MHz and allowing a Fast Ethernet type connection. Alternatively it is possible to provide different switching and spreading units, such as for instance a "hub" type device or a "bridge" type device, according to the number and the typology of connections required each time by different applications.

In case of switch connection the network infrastructure can provide that the stations interact through a LAN of the Ethernet 10BaseT (10Mb) type with UTP wiring of class 5, with a maximum passband of 155 Mb.

The central unit may be realized by means of a PC used as network server. The server PC has an operating system for instance such as the NT Server type (or also Linux). When the number of stations is high, the load can be balanced adding a further server.

When the device according to the invention is installed on a transport mean, for instance a train, the server and the relative hard disk will have advantageously characteristics of resistance to the mechanical solicitations.

The central unit includes a local storage unit, fit for storing excerpts audio and/or video and an external interface, so allowing the interaction with devices supplying external contents and therefore in a such way to allow from the external the storage of audio and/or video excerpts into the local storage unit.

The central unit is the network management unit. The data transmission mode is digital-type. The transmitted signals are multimedia-type, that is audio and/or video. The transmission along the network constituted by the server 1, the switch 2 and the terminals 4 is in encoded form.

A preferred mode of audio data coding is the algorithm MP3, while with the video signals can be used the algorithm MPEG II. The aforesaid particular modes are advantageous for the memory space usage, for the network throughput - because the compression percentage achieved by means of such algorithms is quite high - for the interface with dedicated-type or general-purpose external devices, because the aforesaid algorithms are the most commonly used.

An advantageous embodiment of the present invention provides the configuration of the central unit 1 as Internet server. The central unit 1 will include therefore a Web server, a TCP/IP communication protocol and a HTTP protocol. Preferably the Web Server will be the IIS-type in case of NT operating system or the Apache-type in case of Linux operating system.

The system architecture above described is client-server-type, applied to an Intranet network.

Examples of use are environments within a train, an airplane, a waiting room or a conference room, with a plurality of user stations on armchair, everyone having a terminal unit 4, fit for receiving - for instance by means of headphones and/or monitor - said multimedia audio and/or video signals. The multimedia data diffusion will be based on a "on demand" mode, that means according to the user requests through a panel positioned on the listening armchair.

Every station will be independent of the others and will have its own virtual listening channel.

The focal storage unit records the data in the form of "sound pages." These pages can be both memory pages containing a connection to files (with extension .MP3) and pages with real musical content in MP3 format (and that is memory pages composed by files with extension .MP3).

The unload of the listening material is done through a firmware of navigation.

The transmission modes of the encoded data on network can be the most different, for instance by wire, by optic fiber or by radio.

Reference will now be done to the figure 2, that shows a preferred panel embodiment of the single terminals 4 to be positioned one for every user armchair. These terminals are "embedded-type", based on dedicated hardware. These terminals include, particularly, decoding and executing means for excerpts in MP3 format coming from the server in "streaming" mode.

A button 6 is provided for the language selection (the default choice may be the Italian language), as well as a button 7 for the selection of the interest area (for instance pop music, classical music, prose etc.). At the border of these buttons signaling LED's 8, 9 can be provided in order to give a visual aid for checking the made selection. The excerpt choice is made by searching the excerpt to be listen to and/or to be seen, for instance a button 10 for increasing excerpt and a button 11 for decreasing excerpt. Such search means allow therefore to activate the excerpt selection. Furthermore visualization means of the excerpt number searched at the moment are provided, for instance a two-segment display 12, fit for allowing the vision of the progressive number of the selected excerpt. The selected excerpt will be, for instance, listened by the user through external headphones, known and not shown, connectable to the terminal by means of an outlet 13.

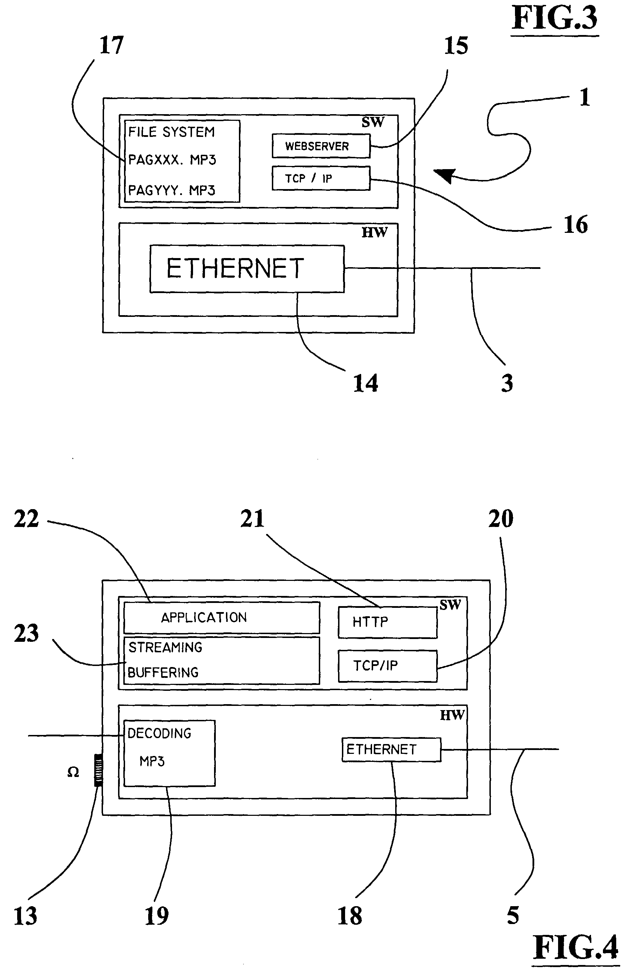

The figure 3 shows in greater detail the hardware and software structure of the server unit 1. The hardware includes an Ethernet door 14, fit for sending out data in encoded form along the connection 3 already described with reference to the preceding figure 1.

The software includes an application program Web Server 15, a TCP/IP protocol 16 and the storage of pages PAGXXX.MP3-type or PAGYYY.MP3-type, inside the "file system" 17. Everyone of these pages refers to a particular audio and/or video excerpt, which could be selected by the user.

The figure 4 shows in greater detail the hardware and software structure of each terminal 4. The hardware includes an Ethernet door 18, fit for receiving the data in encoded form along the connection 5, and a digital/analog decoding unit 19 of the MP3 data in order to allow the excerpt listening by means of the outlet 13 for the external headphones.

The software includes instead the TCP/IP protocol 20, HTTP protocol 21 and the application protocol 22, along with a software unit 23 of data streaming and buffering.

Following are exposed in detail the operational steps driving from the selection to the reception of the excerpt:
a) the user interacts by means of the keys 10 and 11 of the terminal 4, transmitting in this way a command of excerpt request;
b) the terminal 4 provides for the conversion of the command received into a digital command, particularly an URL for instance of the type http://192.168.0.1./pagxxx.mp3;
c) the URL is transmitted to the server 1 using HTTP protocol;
d) the server 1 retrieves the requested page and provides to transmit it by means of HTTP protocol to the terminal 4 making the request: the routing is made through the switch 2;
e) the terminal 4, operating in streaming mode, provides to decode and to execute the sound page, using buffering techniques in order to guarantee the correct play.

The user will be able, in any moment, to shift to another page, and so to another excerpt or listen to again the page, that is the current excerpt.

Through the particular network configuration above exposed, not only the same excerpt can be listened and/or seen by more users at same time, but also the selection modes of the different excerpts are fully independent between station and station, therefore between armchair and armchair, and that is between terminal and terminal. A user will be able, for instance, to listen to the excerpt 1 of the classical music channel at the same instant in which the adjacent user is listening to the excerpt 5 of the same channel.

A second device embodiment differs from the preceding in only the data communication system based, in this case, on the USB (Universal Serial Bus) communication system in its varied versions and evolutions, in place of the Ethernet network, guaranteeing a lower costs, thanks to the small cost of the USB elements.

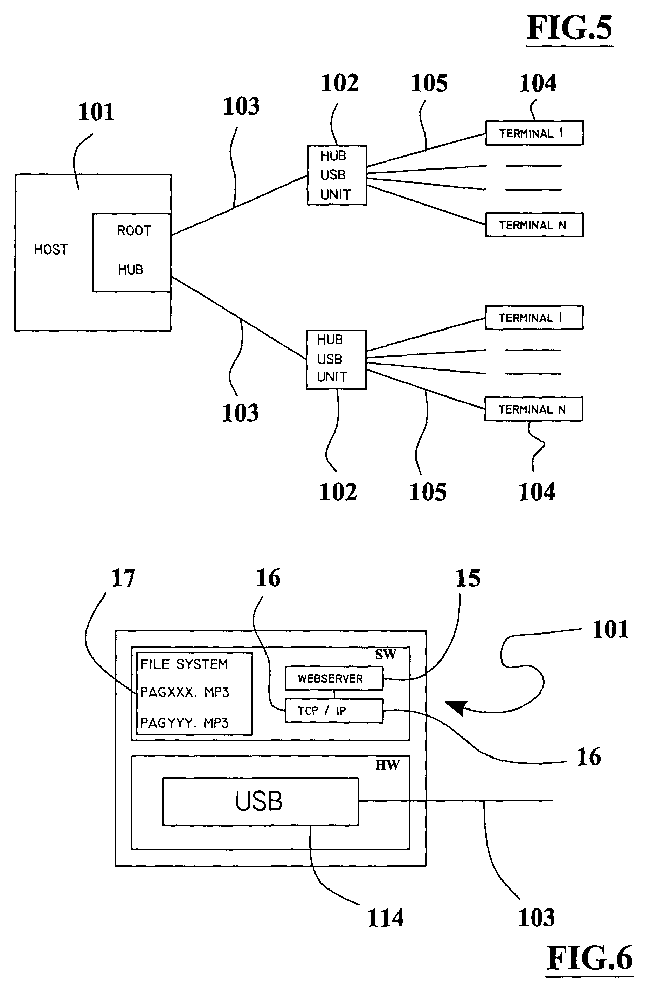

First of all with reference to the figure 5, there is a central unit 101, so-called host, having inside one or more USB ports or a USB "root hub" having a plurality of USB ports for the connection, by means of one or more USB lines of connection 103, to one or more switching and spreading units 102, for instance one or more USB hubs, for the data transmission through USB connections 105. The switching and spreading unit 102 is connected to a plurality of terminals 104 (numbered in figure 5 from 1 to N) by means of respective USB connections 105.

The USB hub use is an advantageous embodiment of the present invention, because it is fast and cheap.

The central unit may be made by a PC used as USB host: the PC host uses a suitable operating system, for instance NT Server-type or other, that has, or can have, suitable USB management programs.

The central unit acts as unit of USB connection management. As in the first embodiment, the data transmission mode is digital-type and the transmitted signals, in encoded form, are of multimedia-type.

The figure 6 shows in detail the hardware and software structure of the host unit 101.

The hardware provides a root hub or one or more USB ports 114, fit for sending out and receiving data in encoded form along the connection 103, above quoted with reference to the preceding figure 5.

Instead the software includes a Web Server 15 application program, possibly the TCP/IP protocol 16 and the storage of pages PAGXXX.MP3-type or PAGYYY.MP3-type, inside the "file system" 17. Each of these pages refers to a particular audio and/or video excerpt, which could be selected by the user.

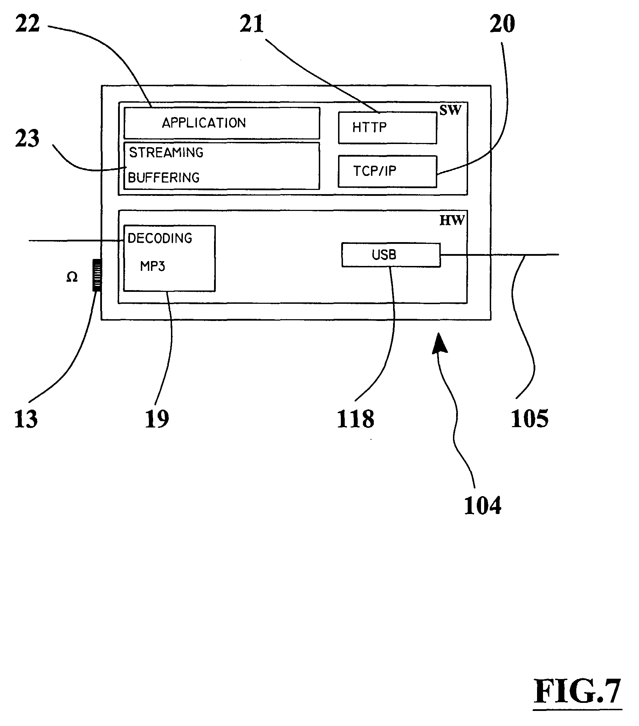

The figure 7 shows in great detail the hardware and software structure of every terminal 104. The hardware includes a USB port 118, fit for the communication of the data in encoded form along the USB connection 105.

The different characteristics, particularly the functionality and the operativeness, are unchanged with respect to the first preferred embodiment.

Advantageously the second embodiment device is much cheaper than the first embodiment device, and it can manage applications with a smaller number of terminals and shorter distances.

## Claims

1. Device for the transmission in encoded digital form of multimedia data characterized in that it includes:
- a central unit (1, 101), having a local storage unit fit for storing multimedia data, particularly audio and/or video excerpts;
- a switching and spreading unit (2, 102) connected to said central unit (1,101);
- a plurality of terminal unit (4, 104), connected to said switching and spreading unit (2, 102), each of said peripheral units including:
- control means (10, 11) to select the transmission of any one of the multimedia data stored in said local storage unit;
- decoding means fit for decoding the received multimedia data;
- said control means (10, 11) being operated independently by any one or more of said peripheral units (4, 104).

2. Device according to claim 1 characterized in that said central unit (1, 101) includes an external interface, fit for allowing the multimedia data storage in said local storage unit.

3. Device according to anyone of the preceding claims characterized in that each of said peripheral units (4, 104) includes visualization means of the excerpt number of the selected excerpt, by means of said control means (10, 11).

4. Device according to any of the preceding claims characterized in that said central unit (1) is configured as Internet server.

5. Device according to any of the preceding claims characterized in that said switching and spreading unit (2) is an Ethernet switch.

6. Device according to any of the claims from 1 to 3 characterized in that said central unit (101) is configured as USB host.

7. Device according to any of the claims from 1 to 3 or 6 characterized in that said switching and spreading unit (102) is a USB hub.

8. Device according to any of the preceding claims characterized in that it has a further central unit, which said switching and spreading unit (2, 102) is connected thereto.

9. Device according to any of the preceding claims characterized in that said audio and/or video excerpts are respectively encoded with MPEG II and/or MP3 coding.

10. Method of transmission in encoded digital form of multimedia data, particularly audio and/or video excerpts, from one or more central units to a plurality of peripheral unit, with said method characterized in that it includes:
- to require, on the peripheral side, the transmission of an excerpt;
- to convert, on the peripheral side, said request in a digital command;
- to transmit said digital command;
- to retrieve, on the central side unit and according to said digital command, one among several excerpts;
- to transmit in encoded digital form said retrieved excerpt; and
- to decode and to convert said retrieved transmitted excerpt to be listened and/or viewed by a user,
with said excerpts being requested, listened and/or viewed independently from any one or more of said peripheral units.

11. Method according to claim 10 characterized in that further includes the display of the excerpt number of the requested excerpt.

12. Method according to claim 10 or claim 11 characterized in that said transmission is made by means of HTTP protocol.

13. Method according to any of the claims from 10 to 12 characterized in that said decoding is made according to streaming-type mode.
